# DEMANDE DE BREVET EUROPEEN

(11) **EP 0 599 714 A1**
(43) Date de publication de la demande: **01.06.1994**
(21) Numéro de dépôt: 93402821.8
(22) Date de dépôt: 19.11.1993
(51) Int. Cl.: B01D 53/22, B01D 63/08, B01D 61/50

(54) **Echangeur massique et thermique à plaques poreuses**

(30) Priorité: 20.11.1992 FR 9213986
(71) Demandeur: SOCIETE D'ETUDE ET DE CONSTRUCTION DE CHAUDIERES EN ACIER SECCACIER, F-75015 Paris (FR); INSTITUT FRANCAIS DU PETROLE, F-92502 Rueil-Malmaison (FR)
(72) Inventeur: Billy, Alexandre, F-92500 Rueil Malmaison (FR); Grehier, Alain, Paris (FR); Brunel, Gérald, Paris (FR); Billy, Daniel, Paris (FR); Vabre, Georges, F-78290 Croissy sur Seine (FR)
(74) Mandataire: Cabinet HERRBURGER

(57) **Abrégé**

a) Echangeur massique et thermique à plaques poreuses.
b) Echangeur caractérisé en ce qu'il est formé d'un empilage d'éléments du premier circuit et d'éléments du second circuit,
   - chaque élément comprenant :
   - un cadre (4) muni d'une entrée et d'une sortie de fluide (8, 9), une paroi poreuse formant la surface poreuse étant placé sur l'une des faces du cadre (4),
   - les différents éléments et leur paroi poreuse étant empilés directement et réunis les uns aux autres par un agent adhésif.

## Description

La présente invention concerne un échangeur massique et thermique à plaques poreuses, composé d'un circuit pour le premier fluide (gaz chaud contenant des vapeurs condensables) et un circuit pour un second fluide (gaz froid susceptible de se charger en vapeur), le premier fluide devant fournir de la chaleur et de l'humidité au second fluide, échangeur selon lequel le circuit du premier et du second fluide sont séparés par des surfaces poreuses, assurant le passage des condensats du premier circuit vers le second tout en évitant le passage des gaz.

On connaît de multiples formes de réalisation d'échangeurs thermiques à plaques. De façon générale, ces échangeurs sont constitués par des ensembles de cadres et de plaques serrés entre des plaques d'extrémité par l'intermédiaire de moyens de serrage tels que des tiges filetées.

Ces échangeurs à plaques sont certes intéressants pour les emplois usuels mais leur réalisation est trop compliquée et trop lourde pour des échangeurs à plaques poreuses.

Un échangeur massique et thermique est notamment cité dans le document FR 87 00 359.

Il se compose d'une boîte à deux compartiments séparés par une cloison poreuse définissant les deux compartiments pour les fluides participant à l'échange simultané de chaleur et de matière.

Suivant l'importance des débits qu'il doit traiter, cet échangeur se compose d'un assemblage de plusieurs telles boîtes.

Cet échangeur présente l'inconvénient d'une structure relativement compliquée du fait de sa réalisation sous forme de boîtes ou d'empilage de boîtes.

La présente invention a pour but de créer un échangeur massique et thermique de constitution et de fabrication simples, modulaire, adaptable facilement à des débits de fluide très variables.

A cet effet, l'invention concerne un échangeur massique et thermique caractérisé en ce qu'il est formé d'un empilage d'éléments du premier circuit et d'éléments du second circuit,
- chaque élément comprenant :
- un cadre muni d'une entrée et d'une sortie de fluide, la surface poreuse qui peut être par exemple un tissu, étant placée sur l'une des faces du cadre,
- les différents éléments et leur tissus étant empilés directement et réunis les uns aux autres par un agent adhésif.

Il est à noter que, selon l'invention, la paroi poreuse participe par sa fonction de capillarité à l'étalement de l'agent adhésif et à l'efficacité de l'assemblage.

On obtient ainsi un échangeur compact, c'est-à-dire dontla surface d'échange par rapport au volume est beaucoup plus importante que dans l'échangeur connu. La réalisation est également beaucoup plus simple à la fois à cause de sa structure modulaire et du faible nombre de pièces différentes. Le mode d'assemblage, par un agent adhésif, tel qu'une colle ou une soudure à froid ou à chaud, simplifie considérablement la fabrication en particulier dans le cas de cadres et de tissus en un même type de matériau comme du PVC permettant un collage très efficace avec de la colle PVC.

Suivant une autre caractéristique, le cadre de l'échangeur comporte :
- une découpe principale délimitant la surface d'échange du tissu, et occupée par la grille formant entretoise, cette découpe principale étant munie dans deux positions opposées par deux prolongements formant une entrée et une sortie de fluide (premier fluide/deuxième fluide),
- deux orifices traversants étant placés à côté des prolongements des entrées/sorties, sans communiquer avec la découpe principale du cadre pour former des passages aller/retour de l'autre fluide (deuxième fluide-premier fluide),
- le tissu formant la surface poreuse comprend quatre orifices dans des positions homologues aux deux prolongements et aux deux orifices du cadre.

Cet élément d'échangeur et par suite l'échangeur formé de tels éléments intègre dans son volume les conduites de distribution et de collecte des fluides participant à l'échange thermique et massique.

Il suffit de brancher l'échangeur sur les deux circuits de fluide.

Une forme de réalisation particulièrement avantageuse de cet échangeur est caractérisée en ce que le cadre est une surface rectangulaire et sa découpe principale est également une surface rectangulaire moins longue que la surface principale en laissant subsister à chaque extrémité de la place pour les découpes des entrée/sortie et les orifices traversants.

Suivant une autre forme de réalisation, le cadre de chaque élément est formé par deux équerres, identiques, ayant un grand et un petit côté, l'un des côtés ayant une longueur inférieure à celle du côté correspondant de l'élément d'échangeur pour former une entrée/sortie de fluide, ainsi que des boîtes distributrices et collectrices destinées à coiffer les entrées/sorties de fluide.

Cette réalisation a l'avantage d'être plus simple au niveau de l'échangeur proprement dit puisque l'élément de base est une équerre et que pour chaque cadre pour l'un et l'autre fluide on utilise seulement deux équerres identiques.

Toutefois, ce type d'échangeur nécessite des boîtes fournissant et recueillant les fluides.

La présente invention sera décrite ci-après de manière plus détaillée à l'aide de différents exemples de réalisation d'un échangeur massique et thermique représentés aux dessins annexés dans lesquels :
- les figures 1A-1C représentent respectivement un premier mode de réalisation d'un élément d'échangeur massique et thermique, montrant à la figure 1A le cadre et l'entretoise, à la figure 1B le cadre encollé, à la figure 1C le tissu poreux formant la paroi d'échange pour les condensats.
- la figure 2 est une vue en coupe transversale d'un échangeur selon les figures 1A-1C.
- les figures 3A-3E représentent un second échangeur massique et thermique selon l'invention, montrant en figure 3A le cadre pour le premier fluide, à la figure 3B le cadre pour le second fluide, à la figure 3C la toile de séparation, aux figures 3D et 3E deux formes de réalisation de la grille formant entretoise.
- la figure 4 montre un élément de cadre selon le mode de réalisation des figures 3A, 3B.
- la figure 5 montre l'assemblage d'un élément selon les figures 3A-3D.
- la figure 6 montre l'assemblage d'un élément selon les figures 3A-3C et 3E.

Selon les figures 1A-2, un échangeur massique et thermique de l'invention est formé d'un empilage d'éléments d'échangeur 1 pour le premier fluide et 2 pour le second fluide ; l'ensemble de l'échangeur est composé par l'empilage de modules 3 formés des éléments 1 et 2.

Chaque élément 1,2 se compose d'un cadre 4, d'un tissu 5 formant la surface poreuse et d'une grille formant entretoise 6. Le tissu 5 est collé sur l'une des faces du cadre 4 et la grille 6 est placée dans l'ouverture 7 du cadre 4 pour compenser l'épaisseur du cadre et éviter l'écrasement ou la déformation du tissu 5 d'un côté ou de l'autre suivant la pression de l'un des fluides par rapport à l'autre.

Selon le mode de réalisation de l'élément représenté à la figure 1A, le cadre 4 est constitué par un élément de format rectangulaire muni d'une entrée/sortie 8, 9 d'un premier fluide et d'un passage d'alimentation/évacuation 10, 11 pour le second fluide.

Les entrées 8, 9 du premier fluide prolongent la découpe 7 du cadre alors que les passages d'alimentation/évacuation 10, 11 du second fluide sont des orifices traversants ne communiquant pas avec la découpe 7 dans le plan du cadre.

Comme déjà indiqué, la découpe 7 reçoit la grille 6 formant entretoise destinée à éviter l'écrasement du tissu 5.

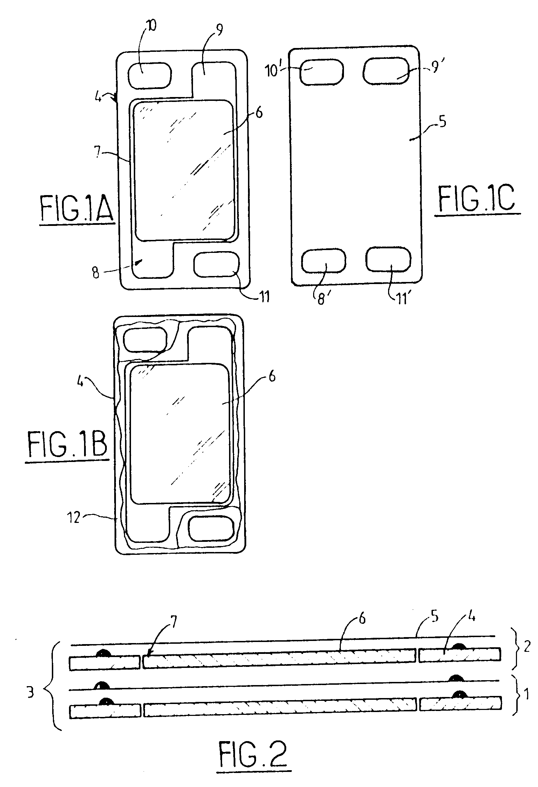

Selon la figure 1B, on munit le cadre d'un cordon de soudure ou de colle 12 pour y fixer la toile 5 (figure 1C). Cette toile 5 est munie d'orifices 8', 9', 10', 11' correspondant aux prolongements 8, 9 de la découpe 7 et aux passages 10, 11 du cadre 4. Puis on place la toile 5 par-dessus le cadre 4 (figure 1B) pour le coller.

L'empilage des cadres et tissus se poursuit pour réaliser autant d'éléments d'échangeur que la puissance d'échange demandée à l'échangeur.

L'ordre d'assemblage choisi dans le mode de réalisation des figures 1A-2 pour l'empilage consiste à superposer chaque fois un tissu 5 par-dessus un cadre 4. L'ordre d'empilage pourrait également être l'inverse c'est-à-dire empiler un cadre sur un tissu ; il s'agit simplement d'une question de convention.

On remarque également que l'empilage des tissus 5 se fait toujours dans le même sens puisque les tissus 5 n'ont pas d'orientation. Par contre, pour réaliser alternativement les éléments 1 et 2 destinés au premier et au second fluide, il faut retourner les cadres 4. En d'autres termes, pour un élément on placera le cadre 4 dans la position représentée aux figures 1A et 1B alors que pour l'élément qui vient pardessus, après avoir placé le tissu 5, on collera sur ce tissu un nouvel élément 4 identique au précédent mais dans une position retournée, pour que les passages du second fluide arrivent dans des prolongements de la découpe de la plaque et qu'au-dessus des prolongements 8, 9 de la découpe 7 de la plaque précédemment mise en place se trouvent maintenant des passages 10, 11 pour le premier fluide.

Selon l'invention, pour des raisons d'homogénéité et de cohésion de l'ensemble, les caches et les plaques poreuses sont constitués d'un même matériau.

Selon l'invention, les cadres 4 et les tissus 5 sont de préférence en chlorure de polyvinyle (PVC) et la liaison entre les tissus et cadres se fait par une soudure à froid, c'est-à-dire par une colle à base de PVC.

Il convient également de remarquer que les grilles formant entretoises 6 sont placées librement dans les découpes 7.

On obtient ainsi un empilage solidaire d'éléments d'échangeur massique et thermique et les faces d'extrémité, c'est-à-dire la face inférieure et la face supérieure sont fermées par des plaques étanches, également soudées à la face correspondante du cadre inférieur et du cadre supérieur.

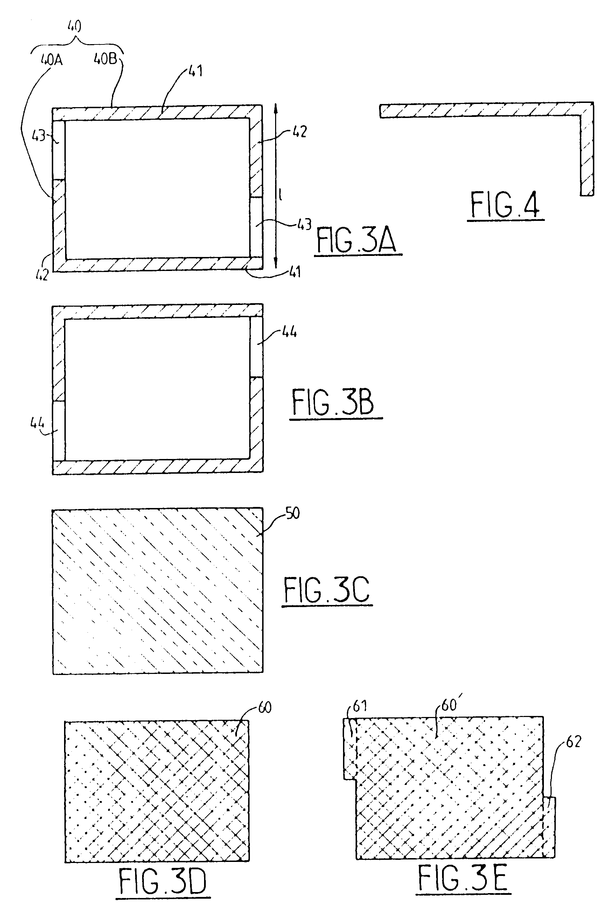

Les figures 3A-5 représentent un autre mode de réalisation de l'invention avec sa variante.

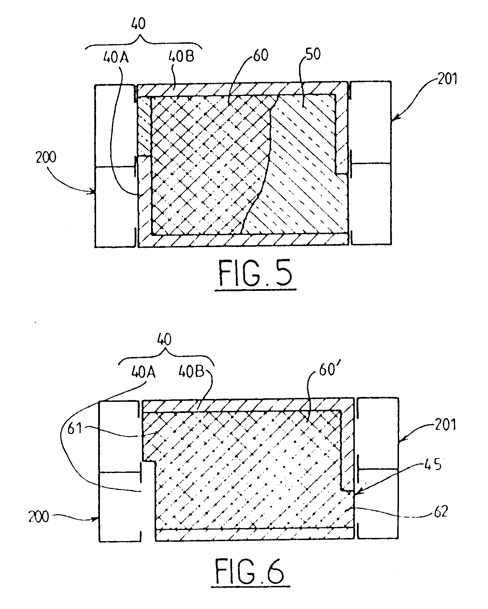

Ce mode de réalisation de l'élément est représenté à l'état terminé à la figure 5 et sa variante est représentée à l'état terminé à la figure 6.

Pour ce second mode de réalisation, le cadre 40 est en fait constitué de deux équerres 40A, 40B identiques, à deux branches 41, 42 correspondant aux côtés de l'échangeur (l'échangeur a en général une section rectangulaire ou carrée). Toutefois, l'une des branches, par exemple la petite branche 42, a une longueur inférieure à la longueur 1 de ce côté, de façon à laisser libre une partie 43 qui constitue l'entrée/sortie du fluide correspondant à ce cadre.

La figure 3B montre la forme du second cadre. Cette forme est identique à celle de la figure 3A sauf que les ouvertures 44 sont placées à un autre endroit.

En fait, le cadre de la figure 3B s'obtient simplement en disposant les équerres 41, 42 autrement qu'à la figure 3A.

La figure 3C montre le tissu 50, de forme rectangulaire, sur lequel on colle les équerres 41, 42 du cadre. La figure 3D montre un premier mode de réalisation de la grille formant entretoise 60. Dans ce mode de réalisation, la grille 60 a la forme d'un rectangle qui s'inscrit dans le cadre 40, 41, 42.

Par contre, dans le mode de réalisation de la figure 3E, la grille 60' formant entretoise comporte des prolongements 61, 62 qui viennent dans les parties dégagées 43 (figure 3A) ou après retournement dans les parties dégagées 44 (figure 3B) pour soutenir la toile dans ses parties dégagées.

La figure 5 montre l'élément obtenu par la fixation du cadre 40 (figure 3A) sur le tissu 50 (figure 3C) et mise en place de la grille formant entretoise 60, représentée partiellement arrachée pour laisser apparaître le tissu 50.

La figure 6 montre la mise en place d'un cadre 40A, 40B, 40 (figure 3A) sur une toile 50 n'apparaissant pas à cette figure et avec mise en place d'une grille formant entretoise 60' dont les prolongements 61, 62 occupent les parties dégagées 44 laissées libres chaque fois par l'une des branches du cadre 40.

Comme dans les modes de réalisation précédents, l'assemblage de l'échangeur se fait par empilage des tissus et des cadres et soudure, notamment une soudure à froid, le tissu et les équerres constituant les cadres étant de préférence en PVC.

Dans les réalisations selon les figures 5 et 6, l'alimentation en fluide des éléments échangeurs se fait par des boîtes distributrices et collectrices 200, 201 accolées aux côtés des éléments et conduisant les deux fluides.

Bien que décrit de façon préférentielle avec une paroi poreuse constituée d'un tissus, le mode de réalisation, selon l'invention, peut tout aussi bien être exécuté avec d'autres types de parois poreuses.

## Revendications

**1°)** Echangeur massique et thermique à plaques poreuses, composé d'un circuit pour le premier fluide (gaz chaud contenant des vapeurs condensables) et un circuit pour un second fluide (gaz froid susceptible de se charger en vapeurs), le premier fluide devant fournir de la chaleur et de l'humidité au second fluide, échangeur selon lequel les circuits du premier et du second fluide sont séparés par des surfaces poreuses, assurant le passage des condensats du premier circuit vers le second tout en évitant le passage des gaz, échangeur caractérisé en ce qu'il est formé d'un empilage d'éléments (1, 2) du premier circuit et d'éléments du second circuit,
- chaque élément comprenant :
- un cadre (4, 40) muni d'une entrée et d'une sortie de fluide (8, 9), une paroi poreuse (5, 50) formant la surface poreuse étant placé sur l'une des faces du cadre (4, 40),
- les différents éléments (1, 2) et leur paroi poreuse (5) étant empilés directement et réunis les uns aux autres par un agent adhésif.

**2°)** Echangeur selon la revendication 1, caractérisé en ce que les éléments du cadre (4-40) et la paroi poreuse (5) sont constitués de la même matière et sont soudés entre eux.

**3°)** Echangeur selon la revendication 1, caractérisé en ce qu'il comprend :
- une entretoise (6, 60, 60') étant placée dans le cadre (4, 40) au-dessus de la paroi poreuse (5, 50) pour occuper l'épaisseur laissée libre par la paroi poreuse.

**4°)** Echangeur selon la revendication 3, caractérisé en ce que la paroi poreuse est un tissu.

**5°)** Echangeur selon la revendication 1, caractérisé en ce que le cadre (4) comporte :
- une découpe principale (7) délimitant la surface d'échange du tissu, et occupée par la grille formant entretoise (6), cette découpe principale (7) étant munie dans deux positions opposées par deux prolongements (8, 9) formant une entrée et une sortie de fluide (premier fluide/deuxième fluide),
- deux orifices traversants (10, 11) étant placés à côté des prolongements (8, 9) des entrées/sorties, sans communiquer avec la découpe principale (7) du cadre (4) pour former des passages aller/retour de l'autre fluide (deuxième fluide-premier fluide),
- le tissu (5) formant la surface poreuse comprend quatre orifices (8', 9', 10', 11') dans des positions homologues aux deux prolongements (8, 9) et aux deux orifices (10, 11) du cadre (4).

**6°)** Echangeur selon la revendication 2, caractérisé en ce que le cadre (4) est une surface rectangulaire et sa découpe principale (7) est également une surface rectangulaire moins longue que la surface principale en laissant subsister à chaque extrémité de la place pour les découpes des entrée/sortie (8, 9) et les orifices traversants (10, 11).

**7°)** Echangeur selon la revendication 1, caractérisé en ce que le cadre (40A, 40B) de chaque élément est formé par deux équerres (40), identiques, ayant un grand et un petit côté (41, 42), l'un des côtés ayant une longueur inférieure à celle (1) du côté correspondant de l'élément d'échangeur pour former une entrée/sortie de fluide, ainsi que des boîtes distributrices et collectrices (200, 201) destinées à coiffer les entrées/sorties de fluide.

**8°)** Echangeur selon l'une des revendications 1 à 7, caractérisé en ce que le cadre (4, 40) et le tissu (5, 50) sont en chlorure de polyvinyle PVC.
